(19) Europäisches Patentamt
European Patent Office
Office européen des brevets

(11) **EP 3 050 855 A1**

(12) **EUROPÄISCHE PATENTANMELDUNG**

(43) Veröffentlichungstag:
03.08.2016   Patentblatt 2016/31

(21) Anmeldenummer: **16151955.8**

(22) Anmeldetag: **19.01.2016**

(51) Int Cl.:
*C03C 3/076* (2006.01)    *B23K 26/00* (2014.01)
*C03C 10/00* (2006.01)    *C03C 23/00* (2006.01)
*F24C 15/10* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **29.01.2015   DE 102015101332**

(71) Anmelder: **Schott AG**
**55122 Mainz (DE)**

(72) Erfinder:
• **Bonitz, Dr., Ralf**
  **55271 Stadecken-Elsheim (DE)**
• **Beier,  Prof. Dr., Wolfram**
  **55270 Essenheim (DE)**
• **Pawlowski, Edgar**
  **55271 Stadecken-Elsheim (DE)**

(74) Vertreter: **Blumbach Zinngrebe**
**Patentanwälte**
**Alexandrastrasse 5**
**65187 Wiesbaden (DE)**

(54) **GLASKERAMIK MIT BESONDERS AUSGESTALTETER OBERFLÄCHE SOWIE VERFAHREN ZU DEREN HERSTELLUNG**

(57)    Die Erfindung betrifft eine Glaskeramik (1), aufweisend eine Oberseite (2) und eine Unterseite (3) sowie eine Oberflächenzone von mindestens 10 nm Dicke, die im Wesentlichen amorph vorliegt, dergestalt, dass in der Oberflächenzone höchstens als 20 Vol.-% kristalline Phasen enthalten sind. Die Glaskeramik (1) weist mindestens eine laterale Strukturierung (5) auf, die in sich periodische und/oder quasiperiodische Strukturen (6) mit einem mittleren Strukturabstand von höchstens 200 μm aufweist. Die Strukturen (6) sind als Vertiefungen im Material der Oberflächenzone ausgebildet, so dass sie insgesamt nicht aus der Ebene der Oberfläche herausragen. Ihre Tiefe ist geringer als die Dicke der Oberflächenzone und reicht nicht in den Bereich der Glaskeramik (1) mit einem höheren Kristallphasengehalt hinein.

Fig. 1

**Beschreibung**

Gebiet der Erfindung

Die Erfindung betrifft eine Glaskeramik mit besonders ausgestalteter Oberfläche sowie ein Verfahren zur deren Herstellung.

Hintergrund der Erfindung

Glaskeramiken werden heute in zahlreichen Anwendungen eingesetzt. Bedingt durch seine mögliche Nullausdehnung und der hohen thermischen, mechanischen und chemischen Beständigkeit, werden Glaskeramiken insbesondere in der Halbleiterindustrie in Steppern und Belichtungsgeräten, in der Astronomie als Spiegelträger und in der Home Tech Industrie als Kaminsichtscheibe oder als Kochfläche eingesetzt.

Glaskeramikkochflächen sind dem Markt seit langer Zeit bekannt, beispielsweise die CERAN®-Felder der SCHOTT AG.

Um als Kochfläche geeignet zu sein, muss eine Glaskeramik eine Reihe von Anforderungen erfüllen. Beispielsweise ist ein geringer thermischer Ausdehnungskoeffizient ($\alpha$< 0,5 * 10$^{-6}$ K$^{-1}$, 20-700°C), eine geringe thermische Leitfähigkeit (k < 2,4 W/(m*K), sowie eine hohe Temperaturunterschiedsfestigkeit notwendig, damit die hohen Temperaturunterschiede, die zwischen beheizten Bereichen und nicht beheizten Bereichen einer Kochfläche auftreten, nicht zum Versagen des Kochfeldes durch Bruch führen. Auch an die Bruchfestigkeit einer Glaskeramik werden hohe Anforderungen gestellt, wobei als Bruchfestigkeit hier die Festigkeit der Glaskeramik gegenüber Belastungen von oben, beispielsweise gegenüber einem unsanft auf die Oberfläche gestellten Topf, bezeichnet ist.

So beschreibt beispielsweise die DE 102005040588 B4 die Anforderungen, die sich an eine Glasur für ein Kochfeld aus Glaskeramiken ergeben. So sollte im Allgemeinen der Ausdehnungskoeffizient eines Substrates und einer darauf aufgebrachten Beschichtung, beispielsweise einer Glasur, aufeinander abgestimmt sein, um Spannungen zwischen Substrat und Glasur und daraus resultierende Risse und Abplatzungen zu vermeiden. Wenn dies, wie bei einer für die Anwendung als Kochfeld geeigneten Glaskeramik, nicht möglich ist, da der Ausdehnungskoeffizient der Glaskeramik im relevanten Temperaturbereich nahe Null ist, sollte die Beschichtung möglichst dünn aufgebracht werden. Ein solch dünner Farbauftrag resultiert allerdings in einem weniger intensiven Farbeindruck.

Neben den hohen Anforderungen, die sowohl an die Festigkeit der Glaskeramik als auch an die mechanische und chemische Beständigkeit der darauf angebrachten Markierungen gestellt werden, werden in den letzten Jahren auch verstärkt zusätzliche Eigenschaften von Kochflächen bzw. Glaskeramiken angefragt, die die Bedienerfreundlichkeit eines Kochfeldes erhöhen sollen.

Dazu zählen insbesondere Oberflächen mit einer erleichterten Reinigbarkeit, die Verringerung der Sichtbarkeit beispielsweise von Fingerabdrücken auf der Kochfläche oder die Unterbindung störender Reflexionen. Für all diese Punkte sind unterschiedliche Lösungen, beispielsweise in Form von Oberflächenbehandlungen oder Beschichtungen, vorgeschlagen worden.

So ist beispielsweise die Erzeugung einer rauen Oberfläche durch einen Ätzprozess möglich. Ein Ätzen einer Glasoberfläche erfolgt dabei meist nasschemisch mittels Flusssäure und stellt somit ein Verfahren dar, bei dem erhebliche Verfahrensrisiken auftreten. Auf diese Weise ist weiterhin auch keine laterale Strukturierung der Oberfläche möglich, da beim Ätzen der Angriff auf die gesamte Oberfläche gleichmäßig erfolgt. Es handelt sich hier um kein gerichtetes Strukturierungsverfahren (anisotroper Ätzprozess), sondern um ein homogenes Strukturierungsverfahren, welches keine scharfen Kanten erzeugt. Anisotrope Ätzverfahren, wie das Ionenstrahlätzen, sind technisch sehr aufwendig, weil ein Vakuum vorhanden sein muss, und damit sehr teuer.

Eine andere Möglichkeit der Oberflächenstrukturierung eines Glases stellt das Einbringen von Strukturierung direkt im Anschluss an den Heißformgebungsprozess mittels einer Walze dar. Auf diese Weise sind allerdings keine lateral strukturierten Bereiche erhältlich, vielmehr wird die gesamte Oberfläche des Glasbandes gleichmäßig mit einer Struktur versehen. Weiterhin liefern Walzverfahren bei Gläsern und Glaskeramiken keine definierten Nanostrukturen, weil bedingt durch die hohe Bearbeitungstemperatur und die damit verbundene Oberflächenspannung die Strukturen verrunden.

Die Herstellung haptischer Schichten auf einem Substrat ist weiterhin aus der DE 20 2009 000 139 U1 bekannt. Die hier erzeugten haptischen Strukturen werden durch mechanische Bearbeitung wie Fräsen hergestellt.

Die EP 1 876 394 A2 beschreibt die Herstellung haptischer Schichten durch einen Druckvorgang, bevorzugt durch eine Mehrfachbedruckung. Eine Mehrfachbedruckung ist technisch sehr aufwendig und damit sehr kostspielig.

Die WO 01/74739 A1 beschreibt die Herstellung einer selbstreinigenden Oberfläche mittels des Aufbringen einer mikrorauen Struktur, wobei die mikroraue Struktur hier durch Strukturhöhen von > 0,1 $\mu$m gekennzeichnet ist. Um eine optimale Selbstreinigung zu ermöglichen, erfolgt zumeist in einem weiteren Schritt die Hydrophobierung der Oberfläche, d.h. ein Aufbringen von Alkyl- und/oder Fluoralkylsilanen. Diese können zwar bei bis zu 500°C eingebrannt werden, allerdings ist eine Dauerbelastbarkeit bei Temperaturen über 300°C nicht gegeben.

Aus der WO 2012/062467 A1 ist weiterhin eine Beschichtung mit einer niedrigen Oberflächenenergie bekannt, die hochtemperaturstabil und kratzfest ist und somit auch für den Einsatz auf einer Kochfläche geeignet scheint. Dafür muss diese Schicht allerdings hinsichtlich der erzeugten Kristallphasen, der Schichtdicke, der Porosität und der chemischen Zusammensetzung genau eingestellt werden.

Die DE 199 18 811 A1 zeigt ein Beispiel einer breitbandigen Entspiegelungsschicht auf Glas. Die Schicht ist dabei porös ausgebildet. Zwar werden Vorkehrungen getroffen, die Abrieb- bzw. Wischfestigkeit der Schicht zu verbessern, die damit erzielte Abriebfestigkeit ist allerdings nicht geeignet für eine sehr hohe mechanische Beanspruchung, wie sie beispielsweise bei der Reinigung einer Kochfläche auftritt.

All den vorgenannten Lösung ist dabei gemein, dass sie eine Reihe gravierender Nachteile aufweisen. So sind in der Regel die vorgeschlagenen Beschichtungen nicht ausreichend kratzfest, um herkömmlichen Reinigungsverfahren für Kochfelder, beispielsweise mit Hilfe eines Schabers zur Entfernung eingebrannter Rückstände, zu überstehen, und/oder weisen eine nicht ausreichende Temperaturbeständigkeit, insbesondere im Heißbereich der Kochfläche, also in den eigentlichen Kochzonen, auf. Beschädigungen der Schichten, beispielsweise durch zu hohe mechanische oder thermische Belastung, sind darüber hinaus in der Regel störend sichtbar. Sollen die Funktionsschichten nur lokal, d.h. lateral strukturiert, aufgetragen werden, besteht die Notwendigkeit aufwendiger und technisch noch nicht ausreichend beherrschter Strukturierungsverfahren. Zu guter Letzt ergeben sich Schwierigkeiten bei der Integration solcher Beschichtungen in den Produktionsablauf, da eine vollflächige Beschichtung eines Kochfeldes mit einer Funktionsschicht in der Regel nach Schritten mit hoher thermischer Belastung wie der Keramisierung und einem ggf. nachträglich erfolgten Einbrand eines Dekors, einem sogenannten Sekundäreinbrand, erfolgen muss. Damit ergibt sich allerdings auch die Problematik der Beschichtung der Markierungen selbst, was an diesen Stellen häufig zu Schichtversagen in Folge von schlechter Haftung führen kann.

Weiterhin ist störend, dass je nachdem, welcher Effekt erzeugt ist, ein anderes Verfahren verwenden muss. So kann es fallweise notwendig sein, zur Erzeugung einer Oberfläche, die Bereiche mit verbesserter Reinigbarkeit, Bereiche mit farbiger Markierung von Kochzonen, Bereiche mit verminderter Oberflächenreflexion sowie Bereiche mit haptischen Eigenschaften aufweist, vier unterschiedliche Verfahren zur Anwendung zu bringen. Dies stellt einen immensen Aufwand dar und ist wirtschaftlich schwer umsetzbar.

Es ergibt sich somit die Notwendigkeit, lateral strukturierte Bereiche mit Markierungs- und/oder sonstigen funktionalen Eigenschaften wie erleichterter Reinigbarkeit oder verminderter Reflexion mit hoher thermischer und mechanischer Beständigkeit ohne Verminderung der Gesamtfestigkeit auf der Oberseite einer Glaskeramik bzw. eines aus einer Glaskeramik bestehenden Kochfeldes in einem wirtschaftlichen Verfahren bereitzustellen.

Aufgabe der Erfindung

Die Erfindung hat zur Aufgabe, eine Glaskeramik mit lateral strukturierten Funktionsbereichen auf mindestens einer ihrer Oberflächen, sowie ein Verfahren zur Herstellung einer Glaskeramik mit lateral strukturierten Funktionsbereichen auf mindestens einer ihrer Oberflächen bereitzustellen.

Zusammenfassung der Erfindung

Die erfindungsgemäße Aufgabe wird durch eine Glaskeramik, ein Glaskeramikprodukt wie z.B. ein Glaskeramikkochfeld, sowie ein Verfahren zur Herstellung einer erfindungsgemäßen Glaskeramik bzw. eines Glaskeramikkochfeldes gemäß den unabhängigen Ansprüchen gelöst. Weiterbildungen der Erfindung sowie vorteilhafte Ausführungsformen finden sich in den jeweiligen Unteransprüchen.

Die erfindungsgemäße Aufgabe wird überraschend einfach durch eine Glaskeramik gelöst, bei der mindestens eine Oberfläche der Glaskeramik mindestens einen lateral strukturierten Bereich, der in sich periodische und/oder quasiperiodische Strukturen mit einem mittleren Strukturabstand von 200 $\mu$m oder weniger, beispielsweise ausgebildet als Mikro- und/oder Nanostrukturen, umfasst, aufweist. Weiterhin wird diese Aufgabe gelöst durch eine Glaskeramik, bei der mindestens eine Oberfläche der Glaskeramik mindestens einen lateral strukturierten Bereich aufweist, wobei die Strukturen hierbei Linien und/oder Flächen sind.

Als lateral strukturiert wird ein Bereich im Rahmen der vorliegenden Erfindung bezeichnet, der auf der mindestens einen Oberfläche der Glaskeramik eine bestimmte, räumlich genau definierte Ausdehnung besitzt und an andere Bereiche angrenzt, die eine andere Struktur der Oberfläche aufweisen. Insbesondere können diese anderen Bereiche der ursprünglichen Glaskeramik entsprechen, mit einer herkömmlichen keramischen Dekorfarbe versehen sein oder ebenfalls Nanostrukturen aufweisen, die allerdings hinsichtlich ihrer genauen Ausprägung von der des ersten Bereiches verschieden sind.

Die Herstellung einer Glaskeramik erfolgt im Regelfall durch eine Temperaturbehandlung (Keramisierung) eines geeigneten Ausgangsglases, des sog. Grünglases. Die erfindungsgemäßen Glaskeramiken sind nicht auf die ausgeführten Beispiele beschränkt, es handelt sich hier um besonders bevorzugte Glaskeramikzusammensetzungen, die die Zusammensetzungsangaben in Gew.-% enthalten können.

**1.- Lithium-Alumino-Silicat Glaskeramiken (LAS)**

$Al_2O_3$ 18-25 %
$SiO_2$ 50-72 %
$Li_2O$ 0, 1-10, 0 %

K$_2$O 0-3 %
Na$_2$O 0-3 %
MgO 0-3 %
P$_2$O$_5$ 0-1 %
SnO$_2$ 0-1 %
TiO$_2$ 1, 0-5 %
ZrO$_2$ 0, 5 -3, 0 %
ZnO 0-5 %

**2.- Lithium-Silicat-Glaskeramiken (Li-Disilikat, Metasilikat)**

Al$_2$O$_3$ 2-25 %
SiO$_2$ 60-85 %
Li$_2$O 5-15%
K$_2$O+Na$_2$O 0-8 %

**3.- Magnesium/Zink-Alumino-Silicat-Glaskeramiken (MAS)**

**4.- Magnesium-Silicat-Glaskeramiken**

**5.- Natrium/Kalium-Alumino-Silicat-Glaskeramiken (NaAS, KAS)**

Die Glaskeramik in der vorliegenden Erfindung verfügt vorzugsweise über eine ausgebildete Oberflächenzone von mindestens 10 nm Dicke, die im Wesentlichen amorph vorliegt. Im Rahmen der vorliegenden Erfindung bedeutet die im Wesentlichen amorphe Ausformung der Oberflächenzone, dass in der Oberflächenzone nicht mehr als 20 Vol.-% kristalline Phasen enthalten sind. Gegebenenfalls kann eine solche glasige Oberflächenzone auch nur auf einer der Oberflächen vorhanden sein, oder eine der Oberflächenzone weist eine geringere Dicke als die vorgenannten 10 nm auf. Ohne Beschränkung auf das dargestellte Beispiel sind Lithium-Aluminosilikat-Glaskeramiken für die Erfindung besonders geeignet. Bei diesem Glaskeramik-Typ kann eine glasige Oberflächenzone mit einem geringen Kristallphasengehalt von höchstens 20 Volumenprozent leicht bei der Keramisierung des Ausgangsglases ausgebildet werden, wobei sich typischerweise eine Lithium-Verarmung in der Oberflächenzone ausbildet. Bei diesem Glaskeramik-Typ ist also die Oberflächenzone 8 durch einen relativ zum inneren Glaskeramikmaterial 10 niedrigeren Lithium-Gehalt gekennzeichnet.

Bei der Glaskeramik kann es sich um eine Platte, einen 3D-Formkörper und/oder um eine Platte mit Aussparungen oder Vertiefungen, die zum Beispiel in Form von Mulden ausgebildet sind, handeln.

Als Mikrostrukturen werden im Rahmen der vorliegenden Erfindung Strukturen verstanden, deren Strukturbreite kleiner als 200 $\mu$m sind. Als Nanostrukturen werden im Rahmen der vorliegenden Erfindung Strukturen verstanden, deren Strukturbreite kleiner als 1 $\mu$m sind.

Bevorzugt beträgt die Strukturtiefe der Mikro- und/oder Nanostrukturen 500 nm oder weniger.

Als Strukturbreite wird dabei in der vorliegenden Erfindung der mittlere Abstand der Strukturen bezeichnet.

In einer weiteren Ausführungsform der Erfindung beträgt die Breite der Strukturen weniger als 0,8 $\mu$m, bevorzugt weniger als 500 nm und liegt besonders bevorzugt zwischen 1 und 400 nm.

Besonders bevorzugt sind die Strukturen als Nanostrukturen ausgebildet.

Insbesondere ist die Strukturtiefe der Mikro- und/oder Nanostrukturen in den lateral strukturierten Oberflächenbereichen der mindestens einen Seite der Glaskeramik so ausgebildet, dass die Strukturen innerhalb der im Wesentlichen amorph ausgebildeten Oberflächenzone der Glaskeramik liegen. Die Mikro- und/oder Nanostrukturen ragen somit nicht in Bereiche der Glaskeramik hinein, in denen ein höherer Gehalt an Kristallphasen als 20 Vol.-% vorliegt. Auf diese Weise sind sehr feine Strukturen möglich, die nicht durch das Vorliegen von Kristallen gestört, d.h. insbesondere die Kantengenauigkeit der Strukturen verändern und die Oberflächenrauhigkeiten erhöhen. Ein weiterer Vorteil dieser Ausführungsform liegt darin, dass auf diese Weise trotz des Vorliegens lateral strukturierter Oberflächenbereiche, die in sich periodische und/oder quasiperiodische Strukturen mit einem mittleren Strukturabstand von höchstens 200 $\mu$m, beispielsweise in Form von Mikro- und/oder Nanostrukturen, aufweisen, die im Wesentlichen amorph ausgebildete Oberflächenzone der Glaskeramik nicht gestört wird, so dass insgesamt die Festigkeit der Glaskeramik erhalten bleibt.

Die lateral strukturierten, in sich periodische und/oder quasiperiodische Strukturen mit einem mittleren Strukturabstand von höchstens 200 $\mu$m aufweisenden Oberflächenbereiche der erfindungsgemäßen Glaskeramik sind als funktionale Oberflächen ausgebildet. Sie weisen einen Farbeindruck, beziehungsweise optische Filtereigenschaften und/oder eine verbesserte Reinigbarkeit und/oder Antireflexeigenschaften und/oder haptische Eigenschaften auf.

Werden Felder mit Bereichen, die einen Farbeindruck und/oder eine Mattierung aufweisen, auf mindestens einer Seite einer Glaskeramik entsprechend der vorliegenden Erfindung hergestellt, so erfolgt dies über die Ausbildung spezieller nano- oder mikrostrukturierte Bereiche. Eine Beschichtung der Glaskeramik bzw. des korrespondierenden Grünglases mit einer keramischen Farbe sowie daran anschließendem Einbrand der Farbe ist nicht mehr notwendig. Werden solche einen Farbeindruck und/oder eine Mattierung aufweisenden Bereiche auf einer Glaskeramik mit den in dieser Erfindung vorliegenden Verfahren erzeugt, ist somit auch kein weiteres Material und kein weiteres Verfahren, insbesondere auch kein Beschichtungsverfahren, zur Erzeugung der Funktionalität notwendig.

Dies gilt auch, wenn andere als Farb- oder Mattierungseffekte in den lateral strukturierten Bereichen erzeugt werden sollten. Auch hier bleibt nach der Behandlung die chemische und Temperaturfestigkeit des zugrunde liegenden Materials erhalten. Die makroskopischen Effekte werden lediglich durch eine Nanostrukturierung in den lateral strukturierten Bereichen erzeugt.

Zur Erzeugung eines Farbeindrucks mittels des in der vorliegenden Erfindung vorgestellten Verfahrens in den lateral strukturierten Bereichen der Oberfläche einer Glaskeramik Gitterstrukturen erzeugt. Werden Gitterstrukturen mit einer Periode der Gitterstrukturen, A, die ungefähr gleich der Wellenlänge des Lichts, λ, ist, erzeugt, so wird nur eine bestimmte Farbe in die 1. Ordnungen reflektiert. Andere Ordnungen sind nicht mehr vorhanden, da der Beugungswinkel nun >90° beträgt. Die 0. Ordnung wird unterdrückt. Notwendig sind hierfür bestimmte Strukturtiefen.

Überraschend hat sich gezeigt, dass im Gegensatz zu der in den Lehrbüchern (beispielsweise Microoptics, Sinzinger und Jahns, Seite 138 ff.) publizierten optimalen Tiefe D für Reflexionsgitter sich bei der Strukturierung der Glaskeramik für optimale Ergebnisse abweichende Werte erhalten werden. So gilt für die optimale Tiefe D einer Reflexionsstruktur nach der Literatur:

$$(1) \qquad D_{lit} = \frac{\lambda}{4} \cdot (n-1) ,$$

wobei λ die Wellenlänge des Lichtes bezeichnet und n der Brechungsindex des Glaskeramikmaterials darstellt. Für die in einer Glaskeramik herzustellenden Reflexionsgitter ergibt sich aber überraschenderweise der folgende Zusammenhang zwischen der theoretisch berechneten Tiefe $D_{lit}$ und der im Versuch ermittelten optimalen Tiefe $D_{GK}$ der Strukturen:

$$(2) \qquad D_{GK} = k \cdot D_{lit} ,$$

wobei k hier einen Korrekturfaktor bezeichnet. Der Korrekturfaktor k, mittels dessen sich die tatsächliche für die Glaskeramik optimale Tiefe $D_{GK}$ aus der theoretisch berechneten Tiefe $D_{lit}$ ergibt, beträgt zwischen 0,5 und 0,9, liegt jedoch meist bei ungefähr 0,66.

In der Regel wird auf diese Weise eine mosaikartige Anordnung kleiner Bereiche erzeugt. Diese rufen aufgrund einer speziellen Nanostrukturierung einen Farbeindruck beim Betrachter hervor. Überraschenderweise ist dieser Farbeindruck überwiegend winkelunabhängig. Unter überwiegend unabhängig wird dabei verstanden, dass sich die reflektierte Intensität in einem Winkelbereich von -30 Grad bis 30 Grad um weniger als 20% ändert.

Die Kombination vieler dieser Felder, erzeugt in einer Art Mosaik, ermöglicht die Erzeugung vieler Farben im RGB-Farbraum. Vorzugsweise sollte die laterale Ausdehnung dieser kleinen Farbbereiche kleiner sein als die Auflösungsgrenze des Auges, also kleiner 20 μm. Auch möglich ist es aber, ein großes Feld mit einem speziellen Farbeindruck zu realisieren. Die Geometrie ist nicht notwendig auf Rechtecke beschränkt, sondern kann auch Bilder, Formen oder Texte darstellen. Gemäß einer Ausführungsform der Erfindung wird also eine laterale Strukturierung vorgesehen, welche mehrere Bereiche oder Felder mit unterschiedlichen optischen Gittern umfasst.

Ist die Periode Λ des Gitters um ein Vielfaches größer als die Wellenlänge des Lichts, λ, werden mehrere Ordnungen reflektiert, und man erhält ein sogenanntes Regenbogenspektrum.

Auf ähnliche Weise wie ein Farbeindruck lässt sich nach der vorliegenden Erfindung auch eine verbesserte Reinigbarkeit der Oberfläche einer Glaskeramik in einem entsprechend strukturierten Oberflächenbereich erzeugen.

Dies geschieht vorteilhaft dadurch, dass in die Oberfläche der Glaskeramik Nanostrukturen eingebracht werden. Hier kommt es dann zum bekannten Effekt der Superhydrophobie, die zuweilen auch als "Lotuseffekt" bezeichnet ist. Durch die Nanostruktur der betreffenden Oberfläche, in der Natur beispielsweise das Blatt der Lotuspflanze, besteht nur ein sehr geringer Kontakt zwischen der Oberfläche selbst, nämlich nur an den "Strukturspitzen" und dem Wasser. Dies behält daher seine Kugelform bei, so dass die Adhäsionskräfte zwischen Wasser und Oberfläche auf ein Minimum reduziert sind. Auch Schmutzpartikel selbst haften nur wenig, da auch hier die Kontaktfläche zwischen Schmutzpartikel und Oberfläche minimiert ist. Das abrollende Wasser kann damit die Schmutzpartikel leicht mitführen, so dass insgesamt die Reinigbarkeit einer solcherart ausgerüsteten Oberfläche deutlich erhöht ist.

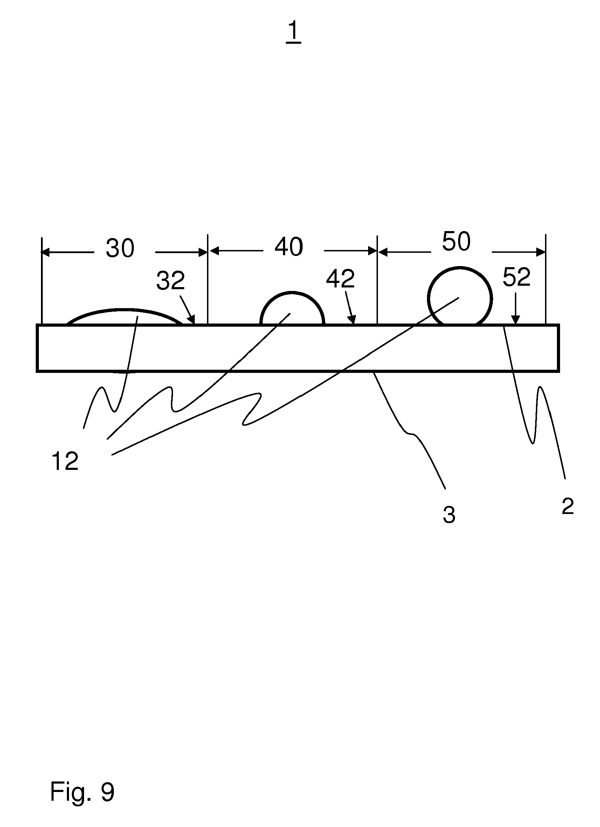

Zur Charakterisierung der Oberfläche und insbesondere zur Feststellung ihrer Hydrophobie respektive Hydrophilie verwendet man üblicherweise den Kontakt- oder auch Benetzungswinkel. Für eine Oberfläche mit Superhydrophobie erhält man dabei einen Kontaktwinkel von größer 120°. Gemessen werden kann dieser Wert beispielsweise mit einem Goniometer. Die Bestimmung erfolgt visuell bei Betrachtung des Tropfens von der Seite. Weiter unten sind in Fig. 9 der vorliegenden Erfindung Tropfen auf einer Oberfläche mit unterschiedlichen Kontaktwinkeln dargestellt.

Weiterhin sind erfindungsgemäß auch Oberflächen mit einer reduzierten Reflexion leicht herzustellen. Dies erfolgt ebenfalls über das Einbringen von Nanostrukturen in die Oberfläche, wobei eine solche Mikrostrukturierung auch in Anlehnung an die Oberflächenstruktur von Insektenaugen als "Mottenaugenstruktur" bezeichnet wird. Diese Strukturen ähneln einem periodischen hexagonalen Oberflächenreliefgitter, sind als 2D-Gitter angeordnet und haben eine Periode von ungefähr 230 nm. Ist die Strukturperiode kleiner als die Wellenlänge des Lichtes, kann sich nur die 0. Beugungsordnung in Reflexion und Transmission ausbreiten, und das Licht tritt durch die strukturierte Oberfläche wie durch eine plane Grenzfläche, was bedeutet, dass das Gebiet als optisch homogen betrachtet und mit einer homogenen effektiven Brechungszahl beschrieben werden kann.

Weiterhin kann eine erfindungsgemäße Glaskeramik auch laterale Strukturierungen aufweisen, die durch haptische Eigenschaften gekennzeichnet sind. Haptische Eigenschaften sind dabei Eigenschaften, die durch Berührung wahrgenommen werden.

In einer weiteren Ausführungsform der Erfindung werden die lateral strukturierten, periodische und/oder quasiperiodische Strukturen mit einem mittleren Strukturabstand von höchstens 200 $\mu$m umfassenden Bereiche nicht nur in der Oberfläche der Glaskeramik selbst hergestellt, sondern können auch auf Bereichen erzeugt werden, die eine von der Glaskeramik abweichende Zusammensetzung aufweisen. Dabei kann es sich beispielsweise auch um die Oberfläche einer keramischen Farbe handeln, in die mittels des erfindungsgemäßen Verfahrens eine Mikro- und/oder Nanostrukturierung eingebracht wird.

Vorteilhaft kann eine solche Strukturierung einer Dekorfarbe damit verbunden sein, dass der Einbrand der keramischen Farbe gleichzeitig erfolgt, also während der Strukturierung der Oberfläche durch das Strukturierungsverfahren selbst auch ein Einbrand der keramischen Farbe erfolgt.

Bei dieser Kombination von Oberflächenstrukturierung und Farbeinbrand ist besonders auf die Einstellung der Leistungsparameter bei der Belichtung zu achten. Zweckmäßigerweise erfolgt die Belichtung durch einen Laser, wobei die Intensität des Laserspots räumlich variiert. Dieses sogenannte "Beamshaping" erfolgt dergestalt, dass der Laserstrahl in seinem Randbereich eine weniger hohe Energiedichte aufweist als in seiner Mitte, so dass eine Ortsauflösung der Intensitätsverteilung des Laserstrahls vorliegt. Die Intensitätsverteilung kann dabei ortsaufgelöst eine oder mehrere Stufen aufweisen oder auch einem komplizierteren Muster folgen, welches beispielsweise durch ein diffraktives optisches Element (DOE) vorgegeben sein kann.

Ein solches Beamshaping ist immer dann unerlässlich, wenn es notwendig ist, zunächst ein milderes Aufheizen des zu strukturierenden Bereichs zu erzielen, beispielsweise beim gezielten Einbrennen anorganischer Farben. Solche anorganischen oder auch keramischen Farben bestehen dabei üblicherweise aus einem Glasfluss, d.h. Partikeln, die bei relativ geringen Temperaturen aufschmelzen, und hochtemperaturstabilen, in der Regel färbenden Partikeln, den Pigmenten. Kommt es durch Energieeintrag zum Aufschmelzen des Glasflusses, umschließt dieser die färbenden, nicht aufgeschmolzenen Partikel, und verbindet sich mit dem Substrat. Ist der Energieeintrag dabei unkontrolliert hoch, kann es sein, dass es zur Bildung einer sogenannten Anschmelz-Reaktions-Zone kommt, an der Ausmuschelungen entstehen können. Um dies zu vermeiden, sollte bei der Verwendung des erfindungsgemäßen Verfahrens die Intensität des Laserstrahls bzw. generell des belichtenden Strahls ortsaufgelöst gezielt eingestellt werden.

Besonders vorteilhaft ist eine Intensitätsverteilung in Rampenform.

Die Glaskeramiken der vorliegenden Erfindung weisen thermisch und chemisch stabile Strukturen auf. Auf diese Weise liegen in einer Weiterbildung der Erfindung Glaskeramiken mit individuellen Authentifizierungsmerkmalen vor. Dies können beispielsweise Logos, aber auch andere Strukturen sein.

Die lateral strukturierten Oberflächenbereiche auf einer Glaskeramik, beispielsweise einer Glaskeramikkochfläche, werden nach der vorliegenden Erfindung durch die Belichtung der Oberfläche der Glaskeramik erzeugt.

In einer Ausführungsform der Erfindung erfolgt die Belichtung der Oberfläche der Glaskeramik zur Erzeugung eines erfindungsgemäßen lateral strukturierten Oberflächenbereichs mit einem Laser.

In einer Weiterbildung der Erfindung erfolgt die Behandlung der Oberfläche mit nicht kohärentem, monochromatischem Licht.

Besonders bevorzugt erfolgt die Strukturierung der Oberfläche unter Verwendung eines UV-ps-Lasers (UV-Pikosekunden-Laser).

In einer weiteren Ausführungsform der Erfindung erfolgt die Behandlung der Oberfläche mit Weißlicht, beispielsweise durch die Benutzung einer Blitzlampe und/oder eines LED-Leuchtmittels.

In einer Ausführungsform der Erfindung entstehen die lateral strukturierten Oberflächenbereiche durch eine durch einen Laser erzeugte Ablation der Glaskeramik an den Stellen, die gemäß einer vorgegebenen Struktur mit dem Laserlicht belichtet wurden.

Das erfindungsgemäße Verfahren zur Herstellung einer Glaskeramik, bei der mindestens eine Oberfläche laterale Strukturen aufweist, die ihrerseits periodische und/oder quasiperiodische Strukturen mit einem mittleren Strukturabstand von höchstens 200 $\mu$m umfassen, umfasst also mindestens die folgenden Schritte:

-    Festlegung eines vorbestimmten Musters mit zu belichtenden und nicht zu belichtenden Oberflächenbereichen zur Erzeugung ein periodischen und/oder quasiperiodischen Strukturen mit einem mittleren Strukturabstand von höchstens 200 $\mu$m,
-    Bereitstellung einer Glaskeramik,
-    Bereitstellung einer Lichtquelle,
-    Behandlung einer Oberfläche der Glaskeramik dergestalt, dass die gemäß dem vorbestimmten Muster zu belichtenden Bereiche belichtet werden.

Soll ein spezielles Muster auf einer Glaskeramik erzeugt werden, so kann dieses beispielsweise durch ein sogenanntes diffraktives optisches Element DOE vorgegeben werden. Möglich ist auch, dass dieses Muster direkt durch einen Computer generiert wird und damit nicht in Form eines DOE, sondern als "elektrisches Hologramm" vorliegt. Dadurch entsteht an den belichteten Stellen eine Ablation oder ein Einbrand. Die Information über das zu erzeugende Muster ist intrinsisch in dem DOE in Form eines computergenerierten Hologramms enthalten. Ob das Muster in Form eines Einbrandes oder in Form einer Ablation in die Oberfläche eingebracht wird, hängt dabei von der speziellen Ausführungsform des Prozesses ab, also davon, ob das Muster direkt in die Oberfläche der Glaskeramik oder in eine keramische Farbe eingebracht werden soll.

Besonders vorteilhaft ist die Verwendung eines DOEs, weil dadurch die Anzahl der Belichtungen deutlich reduziert wird und der Scanvorgang abgekürzt wird oder in bestimmten Fällen ganz entfällt. Das reduziert den kompletten Fertigungsprozess. Weiterhin können hiermit auch recht einfach Nanostrukturen auf 3D-Geometrien realisiert werden.

Als Ablation wird im Rahmen der vorliegenden Erfindung der Abtrag von Material von einer Oberfläche durch Beschuss mit Strahlung bezeichnet. Laserablation oder auch Laserverdampfen bezeichnet danach den Abtrag von Material einer Oberfläche durch Beschuss mit Laserstrahlung. In der Regel ist Laserstrahlung bevorzugt für ein solches Verfahren, da Laserstrahlung eine hohe Leistungsdichte besitzt.

Bei der Laserablation werden typischerweise in Abhängigkeit von Pulsbreite und Wellenlänge folgende Leistungsdichten mit kommerziellen Lasern erzielt:

| | |
|---|---|
| Femtosekundenlaser | $>10^{12}$ W/cm$^2$ |
| Pikosekundenlaser | $>10^{12}$ W/cm$^2$ |
| Nanosekundenlaser | $>10^9$ W/cm$^2$ |
| Mikrosekundenlaser | $>10^9$ W/cm$^2$ |

Soll mit Laserstrahlung ein Einbrand einer keramischen Farbe erfolgen, so ist die Laserleistung geringer als bei der Ablation. Für optimale Ergebnisse des Lasereinbrands ist es notwendig, dass das aufzuschmelzende Material, im vorliegenden Fall die keramische Farbe, die Laserleistung gut und homogen absorbiert.

Für die Prozesse prinzipiell geeignet sind die folgenden Lasertypen:

a. Solid-State-Laser (Stab- oder Disk-, Keramik-, Glas- oder Kristalllaser, beispielsweise Ti:Al$_2$O$_3$-Laser, Nd-YAG-Laser, Yb-YAG-Laser)
b. Faserlaser (beispielsweise aus Er-Glas)
c. Halbleiterlaser (beispielsweise GaAs-Gläser, InGaAs-Laser)
d. Gaslaser (beispielsweise XeF- oder Argon-Laser)

Ausführungsbeispiele

Ausführungsbeispiel 1

Für den Einbrand einer keramischen Farbe zur Erzeugung eines lateral strukturierten Oberflächenbereichs, der in sich periodische und/oder Quasiperiodische Strukturen mit einem mittleren Strukturabstand von höchstens 200 $\mu$m, beispielsweise in Form von Mikro- und/oder Nanostrukturen, aufweist, wird ein Laser mit einer Wellenlänge von 1064 nm verwendet. Der Laser wird im Pulsbetrieb betrieben mit einer Pulsbreite von 10 Nanosekunden sowie einer Frequenz von 5kHz. Es wird eine Laserleistungsdichte von ca. 40 W/cm$^2$ erzielt.

Ausführungsbeispiel 2

Für den Einbrand einer keramischen Farbe wird ein Laser mit einer Wellenlänge von 980 nm verwendet. Er läuft im CW-Betrieb mit einer Belichtungsdauer von 10 Sekunden. Die Laserleistungsdichte beträgt ca. 83 W/cm$^2$.

Beschreibung der Zeichnungen

Fig. 1    zeigt schematisch eine erfindungsgemäße Glaskeramik mit lateral strukturierten Bereichen, die in sich periodische und/oder Quasiperiodische Strukturen mit einem mittleren Strukturabstand von höchstens 200 $\mu$m aufweisen.

Fig. 2    zeigt eine Anlage zur Erzeugung eines Licht-Konzentrators oder -Verteilers.

Fig. 3    zeigt zwei Reflexionsspektren für eine laterale Strukturierung, die in sich periodische und/oder quasiperiodische Strukturen mit einem mittleren Strukturabstand von höchstens 200 $\mu$m, beispielsweise in Form von Mikro- und/oder Nanostrukturen, aufweist, einer Glaskeramikoberfläche.

Fig. 4    zeigt zwei Reflexionsspektren für eine weitere laterale Strukturierung, die in sich periodische und/oder quasiperiodische Strukturen mit einem mittleren Strukturabstand von höchstens 200 $\mu$m, beispielsweise in Form von Mikro- und/oder Nanostrukturen aufweist, einer Glaskeramikoberfläche.

Fig. 5    zeigt zwei Reflexionsspektren für eine weitere laterale Strukturierung, die in sich periodische und/oder quasiperiodische Strukturen mit einem mittleren Strukturabstand von höchstens 200 $\mu$m, beispielsweise in Form von Mikro- und/oder Nanostrukturen aufweist, einer Glaskeramikoberfläche.

Fig. 6    zeigt zwei Reflexionsspektren für eine weitere laterale Strukturierung, die in sich periodische und/oder quasiperiodische Strukturen mit einem mittleren Strukturabstand von höchstens 200 μm, beispielsweise in Form von Mikro- und/oder Nanostrukturen aufweist, einer Glaskeramikoberfläche.

Fig. 7    zeigt schematisch eine erfindungsgemäße Glaskeramik mit lateral strukturierten Bereichen in verschiedenen Mulden, die in sich periodische und/oder quasiperiodische Strukturen mit einem mittleren Strukturabstand von höchstens 200 μm, beispielsweise in Form von Mikro- und/oder Nanostrukturen aufweisen.

Fig. 8    zeigt schematisch eine erfindungsgemäße Wok-Glaskeramik mit einem lateral strukturierten Bereich in einer Mulde, die in sich periodische und/oder quasiperiodische Strukturen mit einem mittleren Strukturabstand von höchstens 200 μm, beispielsweise in Form von Mikro- und/oder Nanostrukturen aufweist.

Fig. 9    zeigt schematisch die Darstellung von Tropfen mit unterschiedlichem Kontaktwinkel auf einer Oberfläche.

Fig. 10   zeigt schematisch die Darstellung einer Gitterstruktur auf einer Oberfläche.

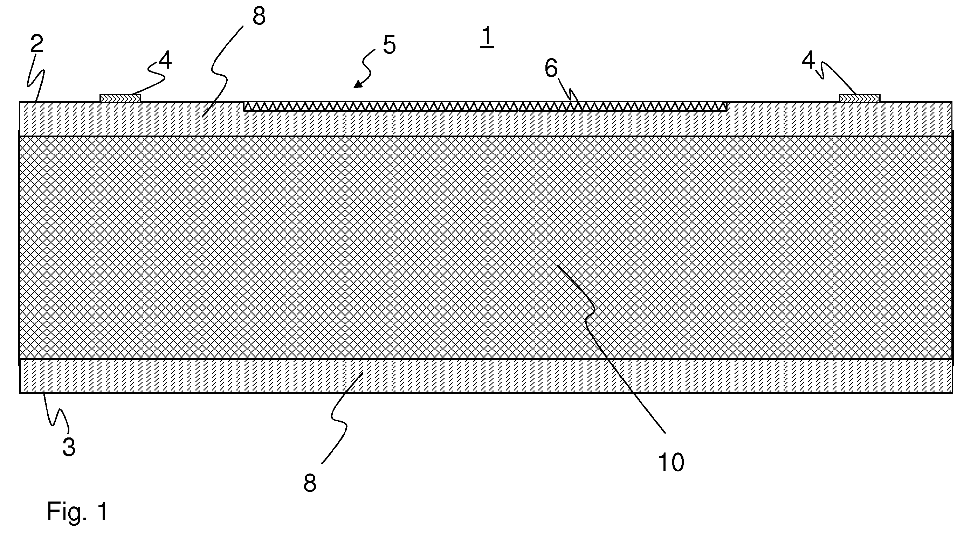

In Fig. 1 ist schematisch eine Glaskeramik 1 dargestellt, die zwei Oberflächen aufweist, nämlich die Oberseite 2 und die Unterseite 3. Die Unterseite 3 der Glaskeramik 1 ist in Fig. 1 dabei als glatt dargestellt, kann allerdings auch genoppt sein.

Allgemein, ohne Beschränkung auf die speziellen, in den Figuren dargestellten Ausführungsbeispielen wird mit der Erfindung nun, wie in Fig. 1 beispielhaft dargestellt, eine Glaskeramik 1 bereitgestellt, welche eine Oberseite 2 und eine Unterseite 3, sowie eine Oberflächenzone 8 von mindestens 10 nm Dicke aufweist, die im Wesentlichen amorph vorliegt, dergestalt, dass in der Oberflächenzone höchstens als 20 Vol.-% kristalline Phasen enthalten sind, wobei die Glaskeramik 1 mindestens eine laterale Strukturierung 5 aufweist, wobei die laterale Strukturierung 5 periodische und/oder quasiperiodische Strukturen 6 mit einem mittleren Strukturabstand von höchstens 200 μm, beispielsweise in Form von Mikro- und/oder Nanostrukturen, 6, aufweist. Diese sind als Vertiefungen im Material der Oberflächenzone 8 ausgebildet. Dabei ragt die laterale Strukturierung 5 insgesamt nicht aus der Ebene der Oberfläche heraus. Die Tiefe der lateralen Strukturierung 5 ist geringer als die Dicke der Oberflächenzone 8 und reicht daher auch nicht in Bereich der Glaskeramik 1 mit einem höheren Kristallphasengehalt hinein. Der Bereich mit einem höheren Kristallphasengehalt ist das eigentliche Glaskeramikmaterial 10. Als solches Material wird eine Glaskeramik mit einem Kristallphasengehalt von mindestens 30% angesehen. Bei der bevorzugt verwendeten Lithium-Aluminosilikat-Glaskeramik ist im Allgemeinen der Lithium-Gehalt in der Oberflächenzone 8 niedriger als im inneren Glaskeramikmaterial 10. Als periodische Mikro- und/oder Nanostrukturen werden auch solche Strukturen erachtet, welche gemeinsam als diffraktiv-optisches Element wirken. Diese weisen zwar nicht notwendig eine strenge Periodizität auf, allerdings sind auch diese Elemente typischerweise aus sich wiederholenden Strukturen aufgebaut. Gemäß einer Ausführungsform der Erfindung wird also eine laterale Strukturierung mit periodischen und/oder quasiperiodischen Strukturen 6 mit einem mittleren Strukturabstand von höchstens 200 μm, beispielsweise in Form von Mikro- und/oder Nanostrukturen, welche als diffraktiv-optisches Element (DOE) wirken, in die Oberflächenzone 8 eingefügt. Mit solchen diffraktiven optischen Elementen können beispielsweise Logos eingefügt werden, welche durch Beleuchtung und Projektion sichtbar werden. Insbesondere kann ein solches diffraktives optisches Element also ein sogenanntes computergeneriertes Hologramm sein. DOEs können beispielsweise nach dem IFTA-Algorithmus berechnet werden. Das so berechnete Muster wird dann anschließend durch Laserablation in die glasige Oberflächenzone 8 eingefügt.

Die Oberseite 2 weist ferner Bereiche auf, bei denen eine Beschichtung 4 aufgebracht wurde. Bei diesen Beschichtungen 4 kann es sich um Kochzonenmarkierungen, beispielsweise in Form eines Kreises, handeln, und durch eine keramische Farbe erfolgen. Bei dem in Fig. 1 gezeigten Beispiel ist es die Oberseite 2 der Glaskeramik 1, welche einen lateral strukturierten Bereich 5 aufweist, der in sich periodische und/oder quasiperiodische Strukturen 6 mit einem mittleren Strukturabstand von höchstens 200 μm, beispielsweise in Form von Mikro- und/oder Nanostrukturen, aufweist. In der dargestellten Abbildung sind zur besseren Darstellung die Maßstäbe der abgebildeten Strukturen dabei nicht korrekt wiedergegeben; so ist die Dicke einer Kochzonenmarkierung, hier beispielhaft dargestellt durch die Beschichtungen 4, in der Regel im Mikrometerbereich, wohingegen die Strukturen 6 Strukturtiefen von weniger als einem Mikrometer aufweisen; die Dicke der Glaskeramik liegt in der Regel zwischen 2 und 6 mm. Wie dargestellt, ist die Tiefe der lateralen Strukturierung 5 mit den periodischen Strukturen 6 geringer als die Dicke der glasigen Oberflächenzone 8. Wie oben bereits erläutert, wird die laterale Strukturierung 5 mit den als Vertiefungen ausgebildeten Strukturen 6 durch Laserablation hergestellt. Es ergeben sich nun besondere Vorteile der Erfindung gegenüber anderen Verfahren zum Herstellen von Markierungen oder Strukturierungen der Oberfläche von Glaskeramiken. Wird eine Nanostrukturierung in ein Glaskeramikmaterial mit üblichem hohen Kristallphasengehalt (typischerweise mehr als 50 Volumenprozent) eingebracht, so besteht das Problem, dass die Kristallite die vorgesehene Gestalt der Nanostruktur-Elemente stören, insbesondere, da die Kristallitgröße zumindest teilweise im Bereich der Strukturgrößen der Strukturen liegt oder diese sogar übertrifft. Damit wird die Form der Strukturen ungenau, da die Ablationsrate von der Form und Lage der Kristallite beeinflusst wird.

Um zu gewährleisten, dass die Vertiefungen nicht durch die glasige Oberflächenzone 8 hindurch in das innere Glaskeramikmaterial 10 hineinragen, wird es bevorzugt, dass die Strukturtiefe der Strukturen 6 500 nm oder weniger beträgt.

Mit den periodisch angeordnete Strukturen 6 lassen sich nun eine Vielzahl von Effekten erreichen. Die Strukturen 6 können insbesondere dazu verwendet werden, einen bestimmten Farbeindruck hervorzurufen oder als Farbfilter zu wirken. Diese Farbeffekte können durch eine Wirkung der lateralen Strukturierung als Gitter oder allgemein als diffraktives optisches Element hervorgerufen werden.

Auch kann eine Antireflex-Wirkung entsprechend eines sogenannten Mottenaugen-Effekts erreicht werden. Dazu wird die Strukturbreite der Strukturen 6 vorzugsweise geringer als die beteiligten Wellenlängen des sichtbaren Spektralbereichs gewählt. Gegebenenfalls kann auch eine verbesserte Reinigbarkeit der Oberfläche erzielt werden. Weiterhin können den strukturierten Oberflächenbereichen auch haptische Eigenschaften verliehen werden, denn trotz der geringen Tiefe der Strukturen 6 ist diese im Allgemeinen fühlbar.

Um die oben genannten Effekte, insbesondere auch um Interferenzeffekte mit sichtbarem Licht zu erzielen, ist es günstig, wenn der mittlere Strukturabstand der Strukturen 6 1000 nm oder weniger, bevorzugt 500 nm oder weniger und besonders bevorzugt zwischen 1 und 400 nm beträgt.

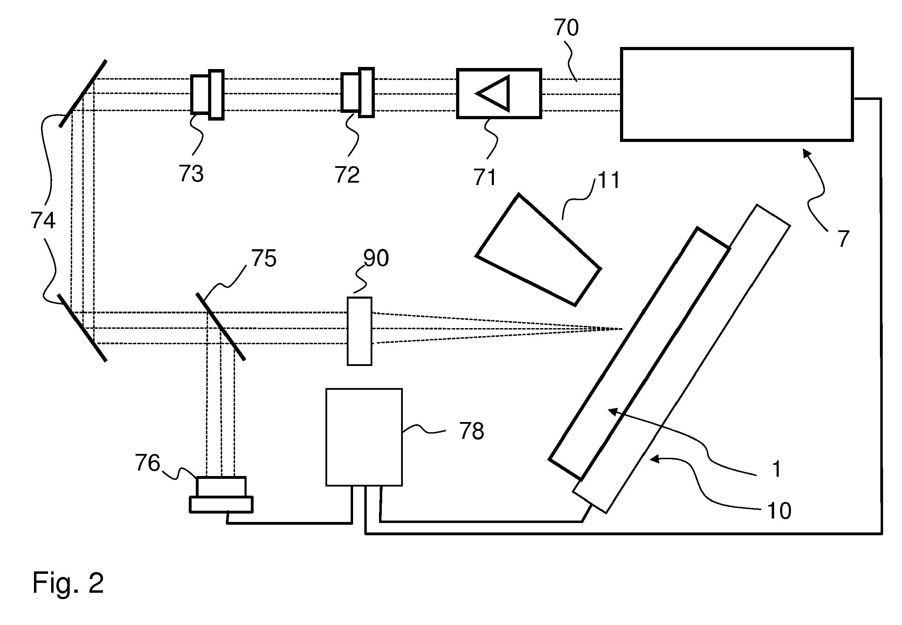

In Fig. 2 ist schematisch eine Vorrichtung zur Erzeugung eines Licht-Konzentrators oder -Verteilers dargestellt, mit welchem eine laterale Strukturierung, wie sie die Erfindung vorsieht, durch Ablation hergestellt werden kann. Ein Laser 7, beispielsweise ein Neodym-Granat-Laser (Nd-YAG-Laser), der frequenzverdreifacht mit einer Wellenlänge von 354,6 nm Wellenlänge bei einer Pulsbreite von einer Pikosekunde (ps) betrieben werden kann, gibt seine Strahlung 70 über eine optische Diode 71, eine λ/2-Platte 72 und einen Polarisator 73 sowie gegebenenfalls über ein Umlenksystem 74 an einen Strahlteiler 75 ab, der einen kleineren Leistungsteil an einem Leistungsmesser 76 ablenkt und einen größeren Leistungsteil einem fokussierenden Element 90 zuführt. Die Laserstrahlung wird auf oder in eine Glaskeramik 1 fokussiert, wobei auf der Glaskeramik auch eine Beschichtung in Form einer keramischen Farbe angebracht sein kann. Die Glaskeramik 1 ist als Werkstück auf einem Werkstückhalter 10 platziert. Der Werkstückhalter 10 ist relativ zu einem Mikroskopobjektiv 11 in x-, y- und z-Richtung fein verstellbar. Hierzu können 3D-piezoelektrische Verstellmotoren zusammen mit Präzisionswälzlager und Linearführungen verwendet werden. Die Messeinrichtung ist interferometrisch. Mit solchen Verschiebeeinrichtungen sind Wiederholgenauigkeiten von besser als 2 nm realisierbar. Eine Steuereinrichtung 78 ist mit dem Laser 7, dem Leistungsmesser 76 und dem Werkstückhalter 10 verbunden, um den Ablauf der Bearbeitung der Glaskeramik 1 zu steuern und zu regeln. Es können auch andere Laser mit einer Pulsbreite von kleiner einer Pikosekunde und mit einer Wellenlänge im Bereich von 180 bis 2000 nm verwendet werden.

Wie oben erläutert, bietet die Erfindung den Vorteil, dass eine Begrenzung der Ablation auf die glasige Oberflächenzone 8 einerseits gut definierte Geometrien der Strukturen 6 ermöglicht, andererseits auch die Festigkeit weniger beeinflusst, verglichen mit einer Ablation im glaskeramischen inneren Material. Diese Effekte können durch weitere Maßnahmen unterstützt werden. Eine Möglichkeit ist die Laserablation bei höherer Substrattemperatur. Vorzugsweise wird gemäß dieser Ausführungsform der Erfindung die Glaskeramik auf mindestens 200 °C erwärmt und die Laserablation dann an der so erwärmten Glaskeramik 1 vorgenommen. Wie auch das Beispiel der Fig. 2 zeigt, wird der Laserstrahl 70 schräg auf die Oberfläche der Glaskeramik 1 eingestrahlt. Es hat sich gezeigt, dass durch eine solche schräge Einstrahlung die Rauhigkeit der durch Ablation hergestellten Strukturen 6 reduziert werden kann. Grund hierfür ist, dass das abladierte Material hauptsächlich senkrecht zur Oberfläche ausgestoßen wird. Bei einer senkrechten Einstrahlung kann dieses Material den Laserstrahl 70 beeinträchtigen.

Günstig ist weiterhin, die Pulswiederholrate kürzer als die Kühlrate t(ΔT<5%) zu wählen. Diese Kühlrate ist die Zeitdauer eines Temperaturrückgangs ausgehend vom durch die Laserablation aufgeheizten Material um 5% der Temperaturdifferenz bis zur Ausgangstemperatur (also Zimmertemperatur oder der Temperatur, um welche die Glaskeramik vorgewärmt wurde).

Nachfolgend werden Ausführungsbeispiele von lateralen Strukturierungen in Form von optischen Gittern erläutert.

Diese optischen Gitter werden durch Strukturen 6 in Form von nebeneinander verlaufenden linienförmigen Vertiefungen, oder auch durch in zwei Raumrichtungen entlang der Oberfläche periodischen Strukturen gebildet.

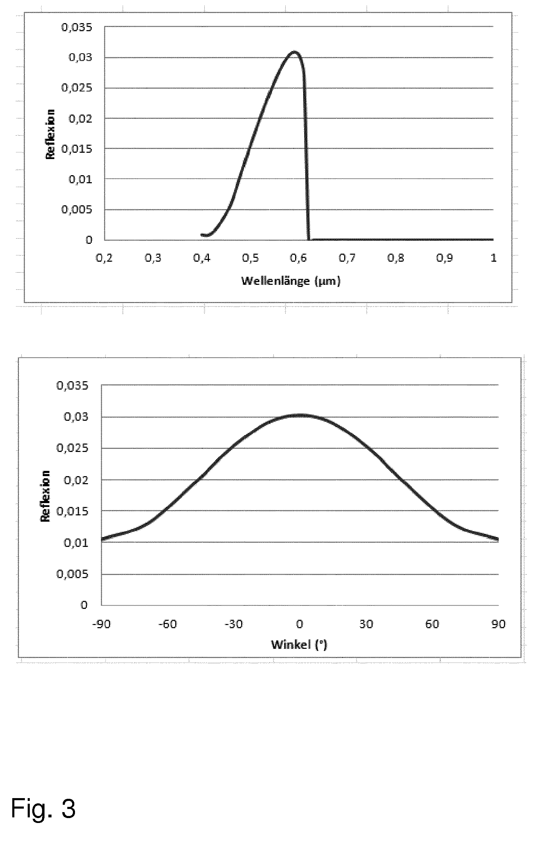

In Fig. 3 ist im oberen Teil die berechnete Reflexion für ein Gitter mit einer Periode von 0,62 μm sowie einer Tiefe $D_{GK}$ von 0,2 μm in Abhängigkeit von der Wellenlänge dargestellt. Der erzielte Farbeindruck mit diesem Gitter ist rot. Die für eine Wellenlänge λ von 0,63 μm nach Gleichung (1) berechnete optimale Tiefe $D_{lit}$ beträgt theoretisch 0,303 μm, so dass sich nach Gleichung (2) der Korrekturfaktor k zu 0,66 ergibt. Im unteren Teil der Fig. 3 ist die berechnete Reflexion in Abhängigkeit vom Betrachtungswinkel gegeben. Wie deutlich erkennbar ist, wird die höchste Reflexion für einen Betrachtungswinkel nahe 0°, d.h. bei nahezu senkrechter Betrachtung, erreicht. Bei einer Änderung des Betrachtungsbereiches von -30° bis 30° ändert sich die Reflexion nur um weniger als 20%.

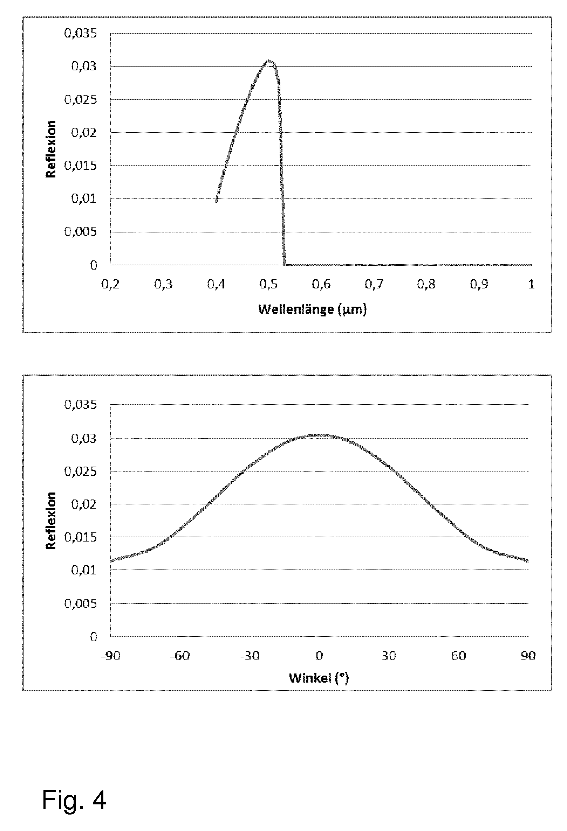

In Fig. 4 ist im oberen Teil die berechnete Reflexion für ein Gitter mit einer Periode von 0,53 $\mu$m sowie einer Tiefe $D_{GK}$ von 0,165 $\mu$m in Abhängigkeit von der Wellenlänge dargestellt. Der mit diesem Gitter erzielte Farbeindruck ist grün. Die für eine Wellenlänge $\lambda$ von 0,53 $\mu$m nach Gleichung (1) berechnete optimale Tiefe $D_{lit}$ beträgt theoretisch 0,25 $\mu$m, so dass sich nach Gleichung (2) der Korrekturfaktor k zu 0,66 ergibt. Im unteren Teil der Fig. 4 ist die berechnete Reflexion in Abhängigkeit vom Betrachtungswinkel gegeben. Wie deutlich erkennbar ist, wird die höchste Reflexion für einen Betrachtungswinkel nahe 0°, d.h. bei nahezu senkrechter Betrachtung, erreicht.

Bei einer Änderung des Betrachtungsbereiches von -30° bis 30° ändert sich die Reflexion nur um weniger als 20%.

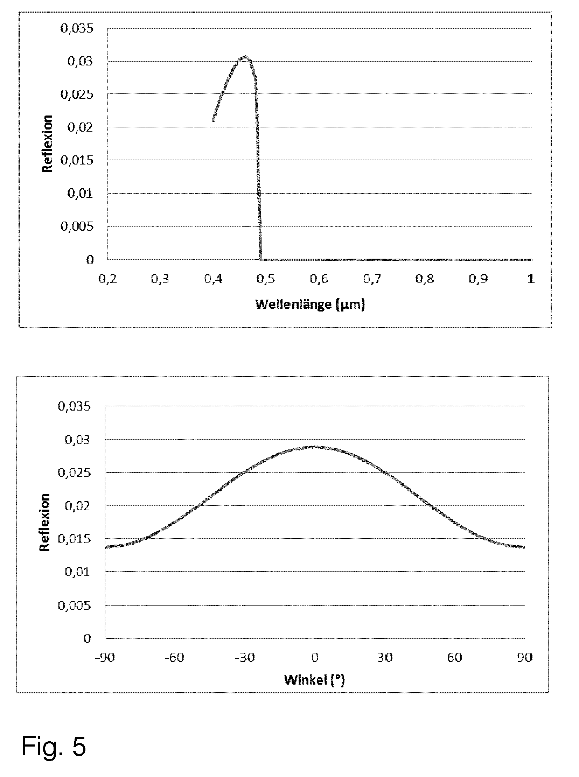

In Fig. 5 ist im oberen Teil die berechnete Reflexion für ein Gitter mit einer Periode von 0,49 $\mu$m sowie einer Tiefe $D_{GK}$ von 0,145 $\mu$m in Abhängigkeit von der Wellenlänge dargestellt. Der mit diesem Gitter erzielte Farbeindruck ist blau. Die für eine Wellenlänge $\lambda$ von 0,53 $\mu$m nach Gleichung (1) berechnete optimale Tiefe $D_{lit}$ beträgt theoretisch 0,226 $\mu$m, so dass sich nach Gleichung (2) der Korrekturfaktor k zu 0,64 ergibt. Im unteren Teil der Fig. 5 ist die berechnete Reflexion in Abhängigkeit vom Betrachtungswinkel gegeben. Wie deutlich erkennbar ist, wird die höchste Reflexion für einen Betrachtungswinkel nahe 0°, d.h. bei nahezu senkrechter Betrachtung, erreicht. Bei einer Änderung des Betrachtungsbereiches von -30° bis 30° ändert sich die Reflexion nur um weniger als 20%.

Gemäß einer Weiterbildung der Erfindung wird als laterale Strukturierung nun ein optisches Gitter in die Oberflächenzone eingefügt, bei welchem die periodischen oder quasiperiodischen Strukturen 6 Vertiefungen sind, die eine Tiefe $D_{GK}$ von

$$(3) \quad D_{GK} = k \cdot \frac{\lambda}{4} \cdot (n-1)$$

aufweisen, wobei $\lambda$ die Wellenlänge des mit maximaler Intensität in erster Beugungsordnung reflektierten Lichts und n der Brechungsindex des Materials der Oberflächenzone und k ein Faktor im Bereich zwischen 0,5 und 0,9, vorzugsweise zwischen 0,6 und 0,8 ist. Gleichung (3) ergibt sich dabei aus der Kombination der oben angegebenen Gleichungen (1) und (2).

Werden in einem lateral strukturierten Bereich 5 nun mehrere Felder mit unterschiedlichen Farbeindrücken, hervorgerufen durch eine im lateral strukturierten Bereich 5 angebrachte periodische und/oder quasiperiodische Strukturen beispielsweise in Form von Mikro- und/oder Nanostrukturen, also mehrere Felder mit unterschiedlichen optischen Gittern kombiniert, so können durch die sich ergebende Farbmischung beliebige Farbeindrücke erzeugt werden.

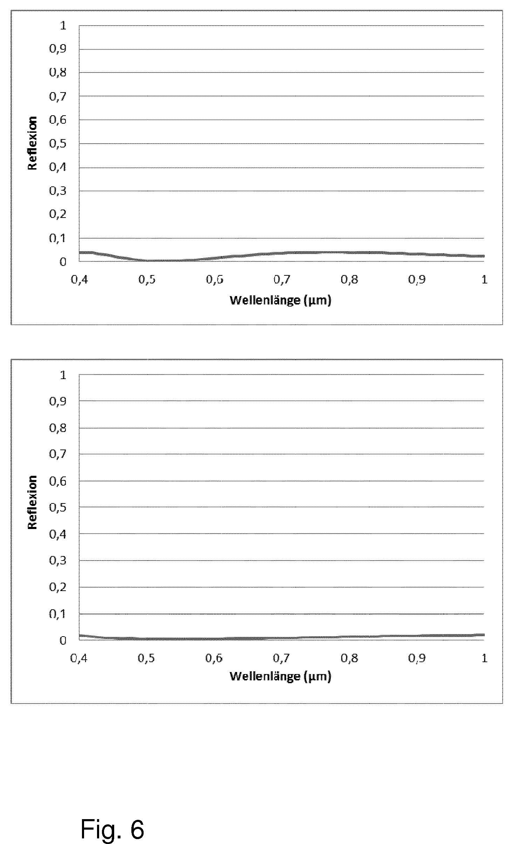

Fig. 6 zeigt zur Veranschaulichung des sogenannten "Mottenaugeneffektes" im oberen Bereich ein berechnetes Reflexionsspektrum für eine Wellenlänge $\lambda$ von 0,5 $\mu$m für ein Gitter mit der Periode 0,25 $\mu$m, einer Tiefe von 0,3 $\mu$m. Aufgrund der Nanostrukturierung der Oberfläche durch das Gitter wird nur eine sehr geringe Reflexion erzielt. Im unteren Teil der Fig. 5 ist ebenfalls zur Veranschaulichung des "Mottenaugeneffekts" ein berechnetes Reflexionsspektrum für ein Gitter mit einer Periode von 0,25 $\mu$m und einer Tiefe von 0,1 $\mu$m für eine Wellenlänge $\lambda$ von 0,5 $\mu$m abgebildet. Auch hier wird eine äußerst geringe Reflexion erzielt.

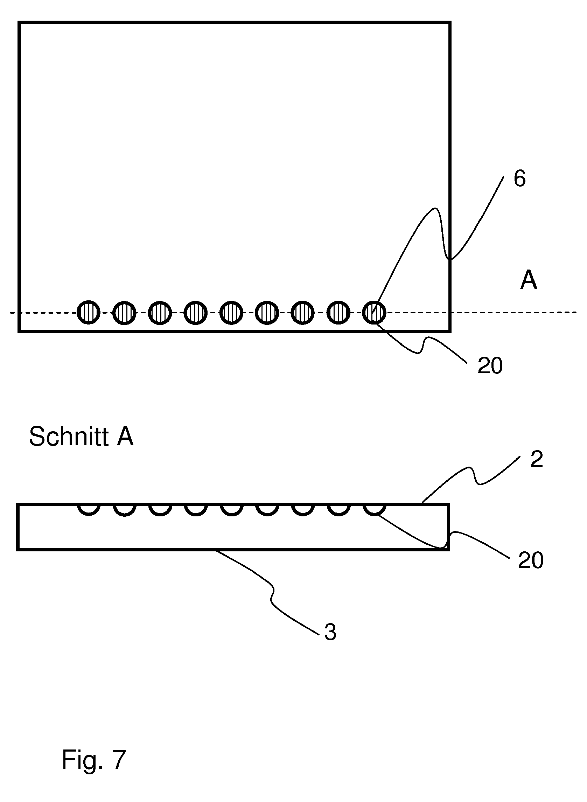

In Fig. 7 ist schematisch im oberen Bereich eine Glaskeramik 1 mit mehreren lateral strukturierten Bereichen 5, hier ausgeführt in Mulden 20, dargestellt, wobei hier die lateral strukturierten Bereiche 5 nicht bezeichnet sind, da sie den als Mulde 20 ausgeführten Bereich der Oberseite 2 der Glaskeramik 1 vollständig bedecken, d.h. in diesem Beispiel die Bereiche 5 identisch mit den Mulden 20 sind. Ebenfalls bezeichnet ist die Linie A, entlang derer ein Schnitt durch die Glaskeramik 1 durchgeführt wurde, wobei dieser Schnitt im unteren Bereich von Fig. 7 gezeigt ist. Die Mulden 20 weisen dabei in sich periodische und/oder quasiperiodische Strukturen 6 auf, beispielsweise in Form einer Mikro- und/oder Nanostruktur, die jeweils durch Laserablation realisiert wurden. Alternativ oder zusätzlich können sich in den Mulden 20 keramische Farben befinden, die jeweils die gesamte Mulde 20 oder auch nur einen Teilbereich von ihr bedecken können, wobei der Farbeinbrand mit einem Laser realisiert worden ist. Es ist auch möglich, dass jeweils nur ein Teilbereich der Mulden mit periodischen und/oder quasiperiodischen Strukturen 6 versehen ist. Weiterhin können sich unter den Mulden 20 eine Leuchtquelle und/oder ein Sensor befinden. Die Glaskeramik weist zwei Oberflächen auf, nämlich die Oberseite 2 und die Unterseite 3. Die Unterseite 3 der Glaskeramik 1 ist in Fig. 7 dabei als glatt dargestellt, kann allerdings auch genoppt sein. Ein solcher in einer Mulde 20 ausgebildeter lateral strukturierter Bereich 5 erhöht die Benutzerfreundlichkeit der Kochfläche durch die haptische Unterstützung der Bedienung. Falls sich unter den Mulden 20 Leuchtquellen befinden, ist es darüber hinaus weiterhin möglich, diese durch die geeignete Strukturierung des lateral strukturierten Bereichs 5 durch periodische und/oder quasiperiodische Strukturen 6 hinsichtlich ihrer Fokussierung bzw. Defokussierung des Lichts zu optimieren und somit weiterhin die Benutzerfreundlichkeit der Kochfläche zu verbessern.

Im unteren Bereich von Fig. 7 ist schematisch ein Schnitt entlang der mit A bezeichneten Schnittlinie dargestellt. Dieser zeigt insbesondere die Form der Mulden 20. Die Mulden 20 weisen mithin eine Oberfläche auf, die eine Krümmung aufweist, d.h. nicht plan ist, wobei hier als Krümmung eine Krümmung verstanden wird, die einen Krümmungsradius von mindestens 1 mm oder mehr aufweist.

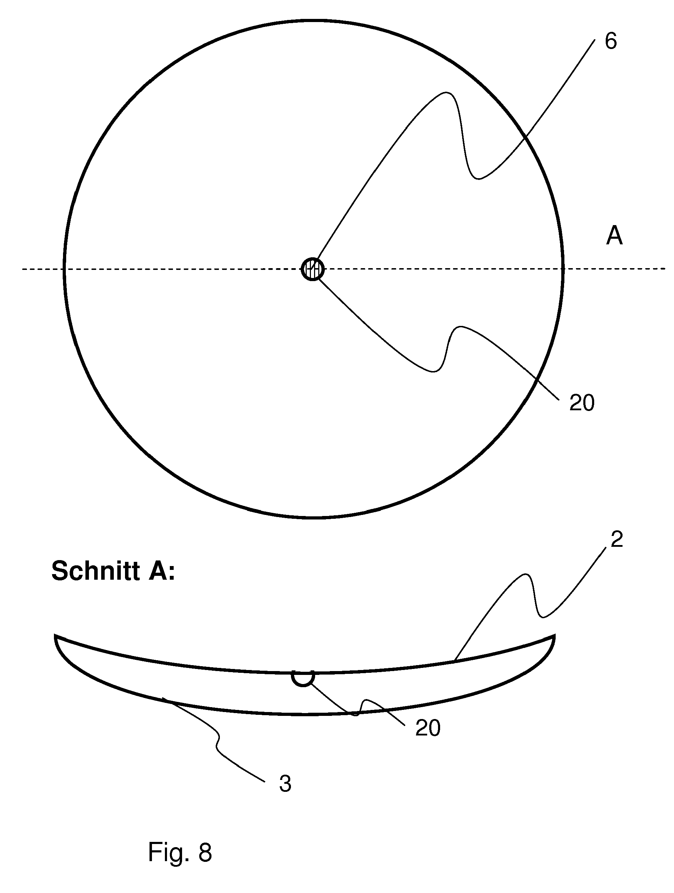

In Fig. 8 ist schematisch im oberen Bereich eine Wok-Glaskeramik 1 mit einem lateral strukturierten Bereich 5 (nicht bezeichnet), hier ausgebildet in einer Mulde 20, dargestellt, wobei hier der die lateral strukturierten Bereich 5 nicht bezeichnet sind, da er den als Mulde 20 ausgeführten Bereich der Oberseite 2 der Glaskeramik 1 vollständig bedeckt, d.h. in diesem Beispiel der Bereich 5 identisch mit der Mulde 20 ist, sowie im unteren Bereich ein Schnitt durch die Glaskeramik 1 entlang der im oberen Bereich der Fig. 8 bezeichneten Schnittlinie A. Die Mulde 20 weist dabei in sich periodische und/oder quasiperiodische Strukturen 6 auf, beispielsweise in Form einer Mikro- und/oder Nanostruktur, die jeweils durch Laserablation realisiert wurden. Alternativ oder zusätzlich können sich in der Mulde 20 keramische Farben befinden, wobei der Farbeinbrand mit einem Laser realisiert worden ist. Weiterhin kann sich unter der Mulde 20 eine Leuchtquelle und/oder ein Sensor befinden. Die Glaskeramik 1 weist zwei Oberflächen auf, nämlich die Oberseite 2 und die Unterseite 3. Die Unterseite 3 der Glaskeramik 1 ist in Fig. 7 dabei als glatt dargestellt, kann allerdings auch genoppt sein. In dem im unteren Teil der Fig. 8 dargestellten Schnitt entlang der Linie A wird die insgesamt gebogene Form der Glaskeramik deutlich, so dass hier die Glaskeramik in Form eines 3D-Formkörpers vorliegt. Weiterhin ist auch die gekrümmte Oberfläche der Glaskeramik im Bereich der Mulde 20 zu erkennen. Als Krümmung wird hierbei eine Krümmung verstanden, die einen Krümmungsradius von mindestens 1 mm oder mehr aufweist.

Fig. 9 zeigt eine schematische Darstellung von Tropfen 12 in unterschiedlichen Bereichen 30, 40 und 50 auf der Oberseite 2 einer Glaskeramik 1. Die Unterseite 3 der Glaskeramik 1 ist hierbei glatt dargestellt, kann aber auch genoppt oder anders strukturiert ausgeführt sein.

Im in der Darstellung linken Bereich 30 der Glaskeramik 1 ist dabei der Kontaktwinkel des Tropfens 12 kleiner als 80° und der Tropfen 12 spreitet auf der Oberfläche 32 des Bereichs 30. Man spricht hierbei auch davon, dass eine solche Oberfläche 32 hydrophil ist und eine gute Benetzbarkeit aufweist.

Im mittleren Bereich 40 der Glaskeramik 1 ist ein zweiter Tropfen 12 dargestellt. Dieser weist zur Oberfläche 42 des Bereichs 40 einen Kontaktwinkel zwischen 80-120° auf. Hier spricht man davon, dass die Oberfläche 42 hydrophobe Eigenschaften aufweist. Dies kann beispielsweise der Fall sein, wenn die Oberfläche 42 zur Hydrophobierung mit einer Silanisierungsschicht versehen wurde.

Im rechten Bereich 50 der Glaskeramik 1 ist ein dritter Tropfen 12 dargestellt. Dieser weist zur Oberfläche 52 des Bereichs 50 der Glaskeramik 1 einen Kontaktwinkel von 120° oder mehr auf. Der Tropfen 12 benetzt die Oberfläche 52 somit kaum. Die Oberfläche 52 weist damit eine sogenannte Superhydrophobie auf. Eine solche Superhydrophobie kann durch eine geeignete Strukturierung einer Oberfläche, beispielsweise in Form von (nicht dargestellten) periodischen und/oder quasiperiodischen Strukturen 6 realisiert wird.

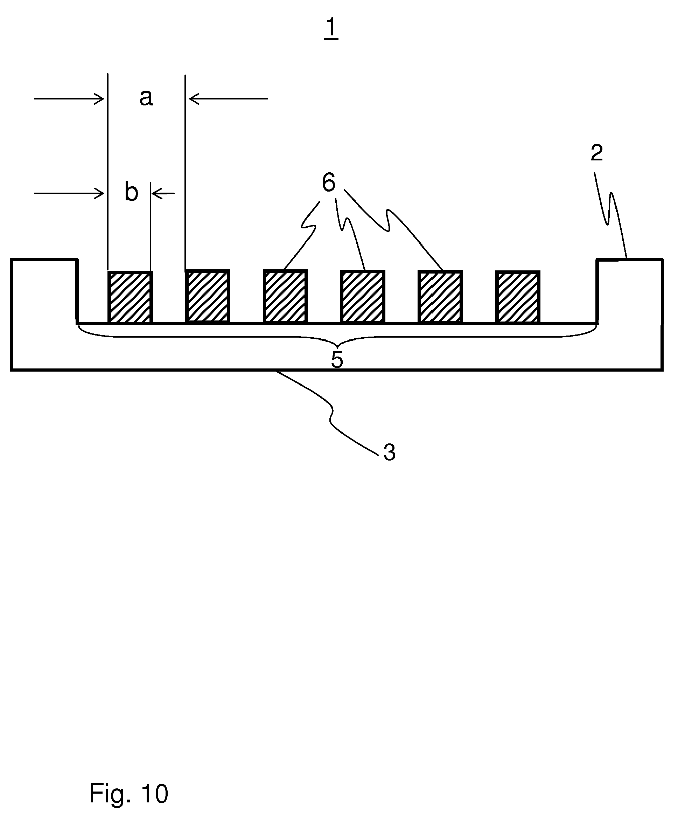

Fig. 10 zeigt in schematischer Darstellung periodische und/oder quasiperiodische Strukturen 6 in einem lateral strukturierten Bereich 5 der Glaskeramik 1, die sich auf der Oberseite 2 der Glaskeramik 1 befinden. Die Unterseite 3 der Glaskeramik 1 ist hier glatt dargestellt, kann aber auch genoppt sein. Zur besseren Übersichtlichkeit sind nicht alle Strukturen 6 bezeichnet worden. Die Strukturen 6 ragen dabei nicht über die ursprüngliche Oberfläche der Glaskeramik hinaus und befinden sich innerhalb der amorphen Oberflächenzone der Glaskeramik. Weiterhin sind sie gekennzeichnet durch eine Periode a sowie eine Breite b der Struktur. Die Bezeichnungen "Periode der Struktur", "Periode der Strukturen" bzw. "Periodenstruktur" werden im Rahmen dieser Erfindung als synonym verwendet, ebenso wie die Bezeichnungen "Breite der Strukturen", "Breite der Struktur" und "Strukturbreite". Zur Erzeugung einer Superhydrophobie sind beispielsweise 2D-Gitter bevorzugt, die ein Verhältnis von b:a von 0,4 bis 0,6 aufweisen. Das Verhältnis von Strukturbreite b zu Periodenstruktur a wird auch als Tastverhältnis bezeichnet. Überraschenderweise sind Strukturen besonders geeignet, die nicht rechteckige Kanten besitzen, wie z.B. pyramidenförmige, zylinderförmige und/oder trapezförmige Strukturen mit abgerundeten Kanten.

Es ist dem Fachmann ersichtlich, dass allgemein, ohne Beschränkung auf die in den vorbenannten Figuren dargestellten Beispiele, es auch möglich ist, nicht nur muldenförmige Vertiefungen in bestimmten lateral strukturierten Bereichen 5 mit periodischen und/oder quasiperiodischen Strukturen 6, beispielsweise Nano- und/oder Mikrostrukturen zu versehen. So können selbstverständlich auch Erhöhungen auf diese Weise einfach mit den Strukturen 6 versehen werden.

Bezugszeichenliste

1 - Glaskeramik
10 - Werkstückhalter
2 - Oberseite der Glaskeramik
3 - Unterseite der Glaskeramik
4 - Beschichtung
5 - lateral strukturierter Bereich
6 - periodische und/oder quasiperiodische Strukturen mit einem mittleren Strukturabstand von höchstens 200 μm
7 - Laser
11 - Mikroskopobjektiv
12 - Tropfen
20 - Mulde
30 - Bereich der Glaskeramik mit hydrophiler Oberfläche

32 - Oberfläche des Bereichs 30 mit hydrophilen Eigenschaften

40 - Bereich der Glaskeramik mit hydrophober Oberfläche

42 - Oberfläche des Bereich 40 mit hydrophoben Eigenschaften

50 - Bereich der Glaskeramik mit superhydrophober Oberfläche

52 - Oberfläche des Bereichs 50 mit superhydrophoben Eigenschaften70 - Strahlung

71 - optische Diode

72 - $\lambda$/2-Platte

73 - Polarisator

74 - Umlenksystem

75 - Strahlteiler

76 - Leistungsmesser

78 - Steuereinrichtung

90 - fokussierendes optisches Element

A - Schnittlinie durch eine Glaskeramik

a - Periode der Struktur

b - Breite der Struktur

**Patentansprüche**

1. Glaskeramik (1), aufweisend eine Oberseite (2) und eine Unterseite (3) sowie eine Oberflächenzone von mindestens 10 nm Dicke, die im Wesentlichen amorph vorliegt, dergestalt, dass in der Oberflächenzone höchstens als 20 Vol.-% kristalline Phasen enthalten sind, wobei die Glaskeramik (1) mindestens eine laterale Strukturierung (5) aufweist, wobei die laterale Strukturierung (5) periodische und/oder quasiperiodische Strukturen (6) mit einem mittleren Strukturabstand von höchstens 200 $\mu$m aufweist, insbesondere Mikro- und/oder Nanostrukturen oder Nanostrukturen, wobei die Strukturen (6) als Vertiefung im Material der Oberflächenzone ausgebildet sind, und die Strukturen (6) insgesamt nicht aus der Ebene der Oberfläche herausragen, und wobei die Tiefe der Strukturen (6) geringer ist als die Dicke der Oberflächenzone und nicht in den Bereich der Glaskeramik (1) mit einem höheren Kristallphasengehalt hineinreicht.

2. Glaskeramik (1) gemäß dem vorstehenden Anspruch, wobei die Glaskeramik (1) mindestens eine laterale Strukturierung (5) aufweist, welche als diffraktiv-optisches Element wirkt, wobei die periodischen und/oder quasiperiodischen Strukturen (6) mit einem mittleren Strukturabstand von höchstens 200 $\mu$m als Vertiefungen im Material der Oberflächenzone ausgebildet sind, und die Strukturen (6) insgesamt nicht aus der Ebene der Oberfläche herausragen, und wobei die Tiefe der Strukturen (6) geringer ist als die Dicke der Oberflächenzone und nicht in den Bereich der Glaskeramik (1) mit einem höheren Kristallphasengehalt hineinreicht.

3. Glaskeramik (1) gemäß den vorstehenden Ansprüchen, wobei die Glaskeramik (1) mindestens eine laterale Strukturierung (5) aufweist, die in mindestens einer Mulde (20) realisiert worden ist.

4. Glaskeramik (1) gemäß den vorstehenden Ansprüchen, wobei die Glaskeramik eine Lithium-Aluminosilikat-Glaskeramik ist und die Oberflächenzone (8) einen relativ zum inneren Glaskeramikmaterial (10) um mindestens 50% niedrigeren Lithium-Gehalt aufweist.

5. Glaskeramik (1) gemäß den vorstehenden Ansprüchen, **dadurch gekennzeichnet, dass** die mindestens eine laterale Strukturierung (5) einen Farbeindruck aufweist.

6. Glaskeramik (1) nach einem der vorstehenden Ansprüche, **dadurch gekennzeichnet, dass** die periodischen und/oder quasiperiodischen Strukturen (6) mit einem mittleren Strukturabstand von höchstens 200 $\mu$m ein optisches Gitter umfassen.

7. Glaskeramik gemäß Anspruch 6, **dadurch gekennzeichnet, dass** ein optisches Gitter in die Oberflächenzone (8) eingefügt ist, bei welchem die periodischen und/oder quasiperiodischen Strukturen (6) mit einem mittleren Strukturabstand von höchstens 200 $\mu$m Vertiefungen sind, die eine Tiefe $D_{GK}$ von

$$D_{GK} < k \cdot \frac{\lambda}{2} \cdot (n-1)$$

aufweisen, wobei die Wellenlänge des mit maximaler Intensität in erster Beugungsordnung reflektierten Lichts und n der Brechungsindex des Materials der Oberflächenzone und k ein Faktor im Bereich zwischen 0,5 und 0,9, vorzugsweise zwischen 0,6 und 0,8 ist.

8. Glaskeramik (1) nach einem der vorstehenden Ansprüche, **dadurch gekennzeichnet, dass** die Strukturtiefe der periodischen und/oder quasiperiodischen Strukturen mit einem mittleren Strukturabstand von höchstens 200 $\mu$m (6) 500 nm oder weniger beträgt.

9. Glaskeramik (1) nach einem der vorstehenden Ansprüche, **dadurch gekennzeichnet, dass** die Breite der periodischen und/oder quasiperiodischen Strukturen (6) 1000 nm oder weniger, bevorzugt 500 nm oder weniger und besonders bevorzugt zwischen 1 und 400 nm beträgt.

10. Glaskeramikkochfeld, bestehend aus einer Glaskeramik (1) nach einem der vorstehenden Ansprüche.

11. Verfahren zur Herstellung einer Glaskeramik (1), aufweisend eine Oberseite (2) und eine Unterseite (3), wobei die Oberseite (2) laterale Strukturierungen (5) aufweist, die ihrerseits aus periodischen und/oder quasiperiodischen Strukturen (6) mit einem mittleren Strukturabstand von höchstens 200 μm aufweisen, umfassend mindestens die folgenden Schritte

    - Festlegung einer vorbestimmten Musters mit zu belichtenden und nicht zu belichtenden Oberflächenbereichen zur Erzeugung einer Struktur,
    - Bereitstellung einer Glaskeramik (1),
    - Bereitstellung eines Lasers (7),
    - Behandlung der Oberseite (2) der Glaskeramik (1) dergestalt, dass die gemäß dem vorbestimmten Muster zu belichtenden Bereiche (5) belichtet werden.

12. Verfahren nach Anspruch 11, **dadurch gekennzeichnet, dass** an den belichteten Stellen ein Abtrag des Materials der Glaskeramik (1) durch Laserablation erfolgt.

13. Verfahren gemäß einem der beiden Ansprüche 11 oder 12, **gekennzeichnet durch** zumindest eines der Merkmale:

    - die Glaskeramik (1) wird auf mindestens 200 °C erwärmt und die Laserablation wird dann an der so erwärmten Glaskeramik (1) durchgeführt,
    - Der Laserstrahl des Lasers (7) wird schräg auf die Oberfläche der Glaskeramik (1) eingestrahlt.

14. Verfahren nach einem der Ansprüche 11 bis 13, **dadurch gekennzeichnet, dass** auf der Oberfläche der Glaskeramik (1) Bereiche (4) belichtet werden, die eine von der Zusammensetzung der Glaskeramik (1) abweichende Zusammensetzung haben, wobei die eine von der Zusammensetzung der Glaskeramik (1) abweichende Zusammensetzung aufweisenden Oberflächenbereiche (4) als keramische Farbe vorliegen.

15. Verfahren nach einem der Ansprüche 11 bis 14, **dadurch gekennzeichnet, dass** die Intensitätsverteilung des belichtenden Strahls räumlich variiert.

Fig. 1

Fig. 2

Fig. 3

Fig. 4

Fig. 5

Fig. 6

Schnitt A

Fig. 7

**Schnitt A:**

Fig. 8

1

Fig. 9

<u>1</u>

a

b

6

2

5

3

Fig. 10

Europäisches Patentamt

European Patent Office

Office européen des brevets

## EUROPÄISCHER RECHERCHENBERICHT

Nummer der Anmeldung

EP 16 15 1955

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 805 829 A1 (SCHOTT AG [DE]) 26. November 2014 (2014-11-26) * Ansprüche 1,7 * * Absatz [0006] * ----- | 1-11 | INV. C03C3/076 B23K26/00 C03C10/00 C03C23/00 F24C15/10 |
| Y | DE 10 2013 103776 A1 (SCHOTT AG [DE]) 18. Juni 2014 (2014-06-18) * Ansprüche 1,7 * * Absatz [0007] * ----- | 1-11 | |
| X | WO 2011/106196 A1 (CORNING INC [US]; MAZUMDER PRANTIK [US]) 1. September 2011 (2011-09-01) | 12-15 | |
| Y | * Ansprüche 1,6,8 * * Abbildungen 2,3 * ----- | 1,2,4-11 | |
| X | WO 2009/128893 A1 (CORNING INC [US]; WAGNER ROBERT S [US]) 22. Oktober 2009 (2009-10-22) | 12-15 | |
| Y | * Anspruch 1 * * Seite 34 * * Abbildungen 4-9 * ----- | 1-7,9-11 | |

RECHERCHIERTE SACHGEBIETE (IPC)

C03C
B23K
F24C

Der vorliegende Recherchenbericht wurde für alle Patentansprüche erstellt

| Recherchenort | Abschlußdatum der Recherche | Prüfer |
|---|---|---|
| München | 27. Mai 2016 | Saldamli, Saltuk |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 15 1955

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2016

| Im Recherchenbericht angeführtes Patentdokument | Datum der Veröffentlichung | Mitglied(er) der Patentfamilie | Datum der Veröffentlichung |
|---|---|---|---|
| EP 2805829 A1 | 26-11-2014 | CN 104108881 A<br>EP 2805829 A1<br>FR 3004445 A1<br>JP 2014206368 A<br>KR 20140123917 A<br>US 2014305929 A1 | 22-10-2014<br>26-11-2014<br>17-10-2014<br>30-10-2014<br>23-10-2014<br>16-10-2014 |
| DE 102013103776 A1 | 18-06-2014 | KEINE | |
| WO 2011106196 A1 | 01-09-2011 | US 2011206903 A1<br>WO 2011106196 A1 | 25-08-2011<br>01-09-2011 |
| WO 2009128893 A1 | 22-10-2009 | CN 102036927 A<br>EP 2280912 A1<br>JP 5479454 B2<br>JP 2011518103 A<br>US 2009261082 A1<br>WO 2009128893 A1 | 27-04-2011<br>09-02-2011<br>23-04-2014<br>23-06-2011<br>22-10-2009<br>22-10-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005040588 B4
- DE 202009000139 U1
- EP 1876394 A2
- WO 0174739 A1
- WO 2012062467 A1
- DE 19918811 A1